# EUROPEAN PATENT SPECIFICATION

(11) **EP 2 433 994 B1**
(45) Date of publication and mention of the grant of the patent: **25.12.2013**
(21) Application number: 10180016.7
(22) Date of filing: 27.09.2010
(51) Int. Cl.: B31D 1/00, B32B 7/12, B65H 19/10, B65H 19/18, C09J 7/02, B31F 5/06

(54) **Adhesive tape and method of manufacturing an adhesive tape**
Klebeband und Verfahren zu seiner Herstellung
Ruban adhésif et son procédé de fabrication

(43) Date of publication of application: 28.03.2012
(73) Proprietor: Illinois Tool Works Inc., Glenview, IL 60026 (US)
(72) Inventor: Lanfranconi, Aldo, 20133 Milani (IT)
(74) Representative: Trinks, Ole

(56) References cited:
- US-A1- 2004 134 591
- US-A1- 2005 103 429

## Description

The invention relates to an adhesive tape for the use in flying reel change applications, like paper or plastic film finishing machines, printing machines and the like. The invention also relates to a method of manufacturing an adhesive tape for use in flying reel change applications. The invention also relates to the use of such an adhesive tape when performing a flying reel change.

An adhesive tape for use in an automatic replacement of rolls during a flying reel change process is known from US 2005/103429 A1. The tape is equipped with a non-sticky spacing which is formed by applying two distinct self-adhesive layers on the surface of the main carrier. The same principle is applied with an adhesive tape disclosed in US 2004/0134 591 A1.

Flying reel change, also known as flying splice, is very common in many applications where a web material which is spun or wound on the rolls also know as reels, is unwound in a very fast manner. This applies to paper or plastic film finishing and paper or plastic film manufacturing where large webs of partially finished paper or plastic film are wound on big rolls or reels, said reels being axle-mounted afterwards. The web paper or plastic film is then threaded through the appropriate paper or plastic film finishing or other machines, wherein the distance between the front edge (leading edge) of the paper or plastic film being threaded through the machines and the roll or reel can become quite large until the leading edge of the paper or plastic film exits the machine again. Therefore, a rupture in the paper or plastic film being currently processed in the machine will result in comparatively long downtimes of the paper or plastic film-finishing or alike machines, mainly due to the fact that the paper or plastic film has to be re-threaded into the machine again.

The same re-threading would be necessary if a reel of paper or plastic film was unwound to its very end, the empty reel was removed and replaced by a new one. The web material, i.e. the paper or plastic film on the new reel would then have to be threaded into the machine again, which takes a lot of time.

In order to avoid this downtime owing the limited capacity of web reels, flying splice procedures, i.e. changing and connecting new web material on a new reel with the old one during the unwinding process of the latter is a very common technique.

In order to replace the almost fully unwound reel of web material by a new reel on the fly, the connection between the new web material on a new roll or reel with the old material being currently unwound is usually done by applying a double-sided adhesive tape on the topmost layer of the new roll, wherein the other self-adhesive site of this tape is then adhered to the old web material being currently unwound without having to stop the old reel.

In order to avoid a sudden movement or jerk, which would almost certainly result in paper or plastic film rupture, the new reel of web material has to be accelerated to essentially the same circumferential speed as the old roll. Therefore, it is necessary not only to equip the topmost layer of the web material on the new roll with the above-mentioned double-sided self-adhesive tape, but also to arrange for a proper, yet temporary fixation of the topmost layer of the new reel of web material on its second layer. By doing this, the web material on the new roll or reel is prevented from unwinding in an uncontrolled manner when accelerating the new roll to the comparatively high speed of the old roll.

The link between the top and the second layer of the web material on the new roll has to be temporary because in the moment of splicing, i.e. when the new roll is approached the web material being currently unwound and then pushed against it while the upper surface of the double-sided self-adhesive tape is adhered to the web material of the old roll being currently unwound, the paper or plastic film or other web material on the new roll is drawn from the roll and therefore separated from the second layer underneath.

If the adhesive strength between the top layer and the second layer is too high, rupture may occur, resulting in downtimes of the paper or plastic film or other web material processing machines.

As it is known from the prior-art, special splicing tapes have been developed which provide a so-called splitable layer which will be split up within a radial drag force becomes too high.

These prior-art tapes consist of a double-sided self-adhesive tape, wherein the tape will split in between the two tape layers. Accordingly, the method of preparing the new roll of web material with a prior-art tape is as follows: first, the top layer of the web material on the new roll has to be folded back such that the prior-art tape can be applied to the second layer or second wind underneath. Usually, the prior-art tape is equipped with a liner paper on its other side such that this liner paper has to be removed now. As a next step, the edge of the top layer having been folded back has to be applied to the upper surface of the prior-art tape in a manner such that a sufficient part of this adhesive surface of the prior-art tape remains for the actual splicing process, i.e. the adhering connection to the old web material being currently unwound. In order not to cover too much of the self-adhesive upper surface, the excess of the top layer may have to be cut neatly before adhering it to the prior-art tape. Furthermore, when folding back the top layer and refolding it again, there is a possibility of not adhering it when the topmost web is wound on the roll in a tight and tense manner.

When tensioning the topmost layer of the web material on the new roll before fixating it on the upper self-adhesive surface of a prior-art tape, however, there is risk of having the starting edge of the topmost web covering less or more of the self-adhesive surface of the prior-art tape than necessary, mainly due to the fact that the tension force applied by hand at the time of adhering the lower surface of the prior-art tape to the second web layer need not necessarily be the same tensioning force of the topmost web after having it folded away and back again.

If a too large area of the top self-adhesive surface of the self-adhesive tape is then covered by the top layer of the web material, it is not available any more when it comes to adhering to the old web material being currently unfolded in the forthcoming flying reel change. In contrast, if only a very small area of the top layer of the new web material is adhered to the upper self-adhesive surface of the tape, there is a risk of loosening before the actual reel change is performed, especially when the new roll of web material is accelerated to the necessary high speed mentioned above.

If the topmost layer of the new web material is not lying tense enough on the second layer, there is a risk of having the top layer being air-lifted during the speed-up of the new roll.

Accordingly, in case of the prior-art solutions, an evident disadvantage is the problem of properly positioning the prior-art double-sided splicing tape on the second layer of the new web material in order to have an edge region of the topmost layer adhered to a proper area of the top surface of the self-adhesive tape while at the same time maintaining a sufficient tension of the topmost layer with respect to the underlying second layer.

With respect to those problems in the prior-art, the object of the invention was to alleviate the disadvantages of the prior-art solutions, in particular by providing a splicing tape for use in flying reel change applications which provides for easy and reliable use.

In accordance with the current invention, this problem is solved by providing a tape according to claim 1, wherein the tape is applied directly to the edge area of the upper surface of the topmost web layer of the new web material without having to fold the top layer back and forth again.

Advantageous embodiments are indicated in the sub-claims.

A method of manufacturing a tape for use in flying reel change applications is also provided herein. Furthermore, a method of performing a flying reel change by making use of a tape for use in flying reel change applications in accordance with the invention is disclosed.

According to the invention, an adhesive tape for use in flying reel change applications is provided which consists of a double-sided adhesive tape comprising a carrier layer, a first self-adhesive layer on an upper surface of the carrier layer and a second self-adhesive layer on a lower surface of the carrier layer, and a splitable tape, comprising a splitable layer made of paper or plastic film, at least one third self-adhesive layer on a lower surface of the splitable layer, and a fixation layer adhered to an upper surface of the splitable layer, the splitable tape being narrower than the double-sided adhesive tape. The at least one third self-adhesive layer of the splitable tape is narrower than the fixation layer of the splitable tape, such that a non-adhesive region is formed on the lower surface of the splitable layer, wherein the third self-adhesive layer extends from a first edge region of the splitable tape to a kiss-cut edge and wherein adjacent to this kiss-cut edge the non-adhesive region extends just up to the other edge of the splitable tape, such that the lower surface of the entire splitable tape is only sticky in a region of the splitable tape extending from the first edge region of the splitable tape up to the kiss-cut edge.

The advantages of the solution in accordance with the invention over the prior-art solutions are evident. First, by applying the tape according to the invention directly to the topmost layer of the web material on the new web reel it is no longer necessary to fold the top layer back and forth again, since the tape in accordance with the present invention can directly be applied to an edge region of the leading edge on the top surface of the topmost layer.

The leading edge region of the top most web layer is overlapped by the applied tape such that parts of the top surface of the topmost layer are in adhesive contact with a self-adhesive layer present on a lower ,surface of a carrier layer of the double-sided adhesive tape and a top surface of the wound web material after little less than one turn or winding is in adhesive contact with a comparatively small self-adhesive layer present on a lower surface of the splitable tape.

Thus, a relatively large self-adhesive surface on the lower surface of the double-sided adhesive tape is in contact with the top surface of the topmost layer of web material, e.g. paper or plastic film. Parts of the tape are protruding over and across the leading edge of the topmost layer such that this part of the tape sticks out in the direction of the layer underneath, i.e. the layer of web material which is wound on the reel a short distance before it would disappear under this leading edge, becoming the second layer of wound web material. For the sake of simplicity, this area shortly before reaching the leading edge of the top layer again is already attributed to the second layer (second web) of web material.

Since the self-adhesive layer on the lower surface of the splitable tape which is in contact with the second web or second layer of the wound web material is present on a splitable layer of the splitable tape, as soon as a force such as a radial or parallel lifting force occurring during a reel change is present, the splitable layer of the splitable tape will split or cleave, releasing the bond between the small self-adhesive layer on the second web and the double-sided adhesive tape on the first, topmost web.

The force which is necessary to initiate this disrupture or splitting is higher than the force usually occurring on the leading edge region of the web material when the reel is accelerated to the paper or plastic film transportation speed before a reel change.

This provides for a bond of the topmost web on the second web underneath which is high enough to secure the topmost web during acceleration and at the same time easily breaks and splits up at the time when the actual reel change is performed.

Furthermore, an essentially non-adhesive region is formed on the lower surface of the splitable layer and thus in between the adherence zones on the topmost web and the web underneath, respectively. This non-adhesive region separates the splitable portion on the lower surface of the splicing tape from the non-splitable portion. By providing this non-adhesive region, i.e. by making the lower surface of the splicing tape only partially adhesive while at the same time separating the splicable adhesive part from the non-splicable adhesive part, it is possible to apply the splicing tape on a leading edge of the topmost layer of the web material if this leading edge is not cut very neatly. Since the splitable tape overlaps the leading edge of the topmost layer with this essentially non-adhesive region, there is no danger of accidentally fixating the topmost web layer on the underlying second layer with the non-splitable self-adhesive part of the tape. Therefore, the danger of producing a rupture-sensitive, non-splitable bond between the topmost web layer and the second layer underneath is significantly reduced.

Furthermore, essentially the whole area of the upper surface of the splicing tape, i.e. the self-adhesive layer present on the upper surface of the carrier layer of the double-sided adhesive tape, participates in the actual splicing process. In other words, during a flying reel change, a significantly larger adhesive surface is brought into contact with the old web material being unwound when making the bond or splice, which results in a significantly reduced risk of splice failure. By providing a solution allowing topside bonding on the top surface of the web material, an adhesive area approximately 30% larger is provided on the top surface when compared with the prior-art underneath bonding comparing the same widths of dimensions.

Because of this larger adhesive area, also higher rotation speeds are possible. In print applications like paper or plastic film finishing or rotating printing machines, this means during the whole printing or finishing process, higher print speeds are possible. Also, during flying reel change or roll splicing, the speed during this roll splicing action is increased just as well. This again results in a higher paper or plastic film output of the printing machine.

For example, it is possible to equip the upper surface, this means the first self-adhesive layer of the double-sided adhesive tape which, during a splicing action, comes into contact with the old web being unwound, with a first release liner. This release liner protects the upper self-adhesive surface when a strip of the adhesive tape in accordance with the invention is applied to the edge region of the topmost layer of the new web material. Furthermore, as long as the adhesive tape is wound on a tape roll, the first release liner serves as a supporting and protection layer in between the several tape webs.

Even more advantageously, it is possible to provide a first release liner which is wider than the carrier layer of the double-sided adhesive tape. By making the first release liners slightly wider, a lifting aid or finger lift is formed which makes it easier to remove the first release liner after its application on the web roll.

Additionally, it is also possible to provide a second release liner which covers the third self-adhesive layer which is present on the splitable layer of the splitable tape. This makes it possible to apply the second self-adhesive layer present on the lower surface of a carrier layer of the double-sided adhesive tape to the edge region of the leading edge of the topmost web layer of the new web material and then check whether all of the paper or plastic film in the edge region only protrudes over the essentially non-adhesive region of the splitable tape and does not exceed this non-adhesive region. By providing the second release liner on the third self-adhesive layer, any access of paper or plastic film material will not immediately and wrongly adhere to third self-adhesive layer and can be removed before the removal of the second release liner. In addition, by providing the second release liner, the splicing tape can be provisionally fixed to the topmost web, then a proper tensioning of the topmost web on the underlying second web of the new web material can be assured, and then, after tensioning, the second release liner is removed and third self-adhesive layer is affixed to the second web of new web material.

Advantageously, the material of the carrier layer of the double-sided adhesive tape can be varied. Depending on the application, the carrier layer is made of thin and flexible material, for example, paper or paper based material, tissue, plastic film or metal. In addition, also dependant on the application, one ore more of the self-adhesive layers, i.e. the first self-adhesive layer and/or the second self-adhesive layer of the double-sided adhesive tape and/or the third self-adhesive layer present on the splitable tape is/are, for example, water-soluble or based on acrylic or based on silicon compounds or based on rubber compounds.

This ensures that - depending on the application and depending on the kind of web material - a splicing tape according to the present invention provides comparable, reliable results.

In an even further advantageous manner, the third self-adhesive layer can be present in a first edge region of the splitable tape. In the terminology of this description, an edge region of the tape relates to a region near the edge of the tape with respect to the tape with, wherein the respective layers described to be present in an edge region of the tape extend, of course, along the length of the tapes.

By providing the third self-adhesive layer in an edge region of the splitable tape, the essentially non-adhesive region extending across and over the leading edge of the web material after application is large, allowing a certain unevenness or a slightly aslope course of said leading web material edge.

However, it is also possible to provide the third self-adhesive layer of the splitable tape in a region different from the immediate edge region of the splitable tape, such that an edge of the third self-adhesive layer is not exactly flushed with the edge of the splitable tape. This reduces the area of the non-adhesive region in between the two self-adhesive parts on the lower surface of the splicing tape; yet the cleavage force or split force necessary to split the splitable layer can be varied in order to adapt the splitable tape to the specific application. This change of cleavage force can also be achieved by changing the cleavable strip, i.e. the third self-adhesive layer, in width, or by varying the cleavage force or split force of the material of the splitable layer itself. Also, it is possible to provide more than a single third self-adhesive layer, i.e. to interrupt the third self-adhesive region present on the lower surface of the splitable tape and provide two separate third self-adhesive layers. Depending on the specific situation of the application, this also influences the cleavage force or split force necessary to separate the topmost web layer from the second web layer underneath when the slicing tape according to the invention is used in a flying reel change application.

Even more advantageously, a pigment line such as an ink line may be provided. This pigment line can for example be applied to one surface of the first release liner covering the first self-adhesive layer of the double-sided adhesive tape. In case the first release liner is essentially or partially transparent, it is also possible to provide the ink line or pigment line on the first self-adhesive layer of the double-sided adhesive tape itself, such that it is visible through the upper surface of the first release liner. This line extends in the main extrusion direction of the splicing tape that is the direction of length of the tape, and indicates approximately the position or location of an edge of the third self-adhesive layer of the splitable tape underneath. This allows for proper positioning of the partially adhesive tape or splicing tape since the position of the trailing edge of the third self-adhesive layer may be properly assessed.

In an advantageous manner, the adhesive tape or splicing tape may further comprise a machine-detectable component. This machine-detectable component is preferably a metal strip being detectable by a metal detector; yet it is also possible to provide different machine-detectable components such as radio-responsive materials or RFID chips or the like. The machine-detectable component extends along substantially the entire length of the adhesive tape or in appropriate intervals such that, after its application on the web material, a sufficient width of the web material is marked by the machine-detectable component. By making the tape and therefore also the splice region detectable, the machine processing the web material may be provided with an information on the location of the splice, allowing for subsequent splice-related processing actions such as, for example, stopping printing in this region or the like.

In accordance with the invention, also a method of manufacturing a adhesive tape or slicing tape is provided. In order to manufacture a tape in accordance with the invention, a double-sided adhesive tape comprising a carrier layer, a first self-adhesive layer on an upper surface of the carrier layer and a second self-adhesive layer on a lower surface of the carrier layer is provided. Also, a splitable tape consisting of a splitable layer, at least a third self-adhesive layer on a lower surface of the splitable layer and a fixation layer on an upper surface of the splitable layer is provided.

As a next step, the fixation layer of the splitable tape has to be brought into contact with the second self-adhesive layer of the double-sided adhesive tape. After this adhering of the two tapes, a first edge region of the splitable tape has to correspond to a second edge region or the double-sided adhesive tape.

Before or after adhering the splitable tape and the double-sided adhesive tape against each other, a kiss-cutting action is performed wherein the kiss-cut is applied to the third self-adhesive layer of the splitable tape and extends in the extrusion direction, that is the direction of the length of the splitable tapes. After that, the unwanted part of the third self-adhesive layer is removed by splitting the splitable tape and removing parts of the third self-adhesive layer together with the parts of the splitable tape adherent to the third self-adhesive layer up to the kiss-cut.

By doing this, an essentially non-adhesive region consisting of the remaining parts of the splitable layer and/or the fixation layer of the splitable tape is formed.

The fixation layer being brought into contact with the second self-adhesive layer of the double-sided adhesive tape may also be integrated into the splitable layer of the splitable tape.

The invention also provides a method of performing a flying reel change using an adhesive tape or splicing tape as described. When performing a flying reel change according to this method, after the partially adhesive tape has been provided, also wound web material which is to be joined in another web material being currently unwound is provided. The wound web material is usually wound onto a reel and the another web material is usually unwound from another reel. The wound web material provided comprises an edge which is the leading edge, i.e. the beginning of the topmost web of the wound web material.

As a next step, the partially adhesive tape is adhered over and across the edge of the second wound web material and the adjacent second web.

This step of adhering is done in such a way that the third self-adhesive layer of the splitable tape adheres to upper surface of the second web and that the second self-adhesive layer of the double-sided adhesive tape adheres to the upper surface of the topmost web. Then, the essentially non-adhesive region of the lower surface of the splitable layer extends across the edge of the wound web material. Next, the wound web material, usually present on a reel, is accelerated to essentially the same (circumferential) speed as the speed of the web material which is currently unwound.

As a last step, the wound web material is pressed against the web material being currently unwound, wherein the first self-adhesive layer of the double-sided adhesive tape is adhered to the surface of the web material which is currently unwound.

The invention will now be further described by way of exemplary embodiments with reference to the accompanying drawings in which:
Fig. 1 shows a lateral, sectional and schematic view of an adhesive tape according to the invention, with protective release liners;
Fig. 2 shows a lateral, schematic view of an adhesive tape according to Fig. 1, the release liners removed;
Fig. 3 shows a lateral, schematic view of a tape during its manufacturing process, the kiss-cutting and the partial removal in order to create a non-adhesive region not yet performed;
Fig. 4 shows a tape during its manufacturing process according to Fig. 3, an appropriate kiss-cut already performed, before the partial removal of a third self-adhesive layer;
Fig. 5 shows a lateral, schematic view of an adhesive tape according to Fig. 1, the fixation layer of the splitable tape integrated into the splitable layer;
Fig. 6 shows a lateral, schematic view of an adhesive tape according to Fig. 1, with a machine-detectable component integrated into the carrier layer of the double-sided adhesive tape;
Fig. 7 shows a perspective view on a roll of wound adhesive tape according to the invention;
Fig. 8 shows a lateral schematic view of an adhesive tape according to Fig. 2, the lower surface of the adhesive tape adhered to the topmost web of a roll of web material and the second web of web material underneath, a non-adhesive region of the tape crossing the leading edge of the topmost web of web material;
Fig. 9 shows the two joined webs of web material according to Fig. 8, a new web of web material already attached to the upper surface of the double-sided adhesive tape and the splitting process of the splitable tape not yet performed;
Fig. 10 shows a lateral, schematic view according to Fig. 9, the splitting process performed.

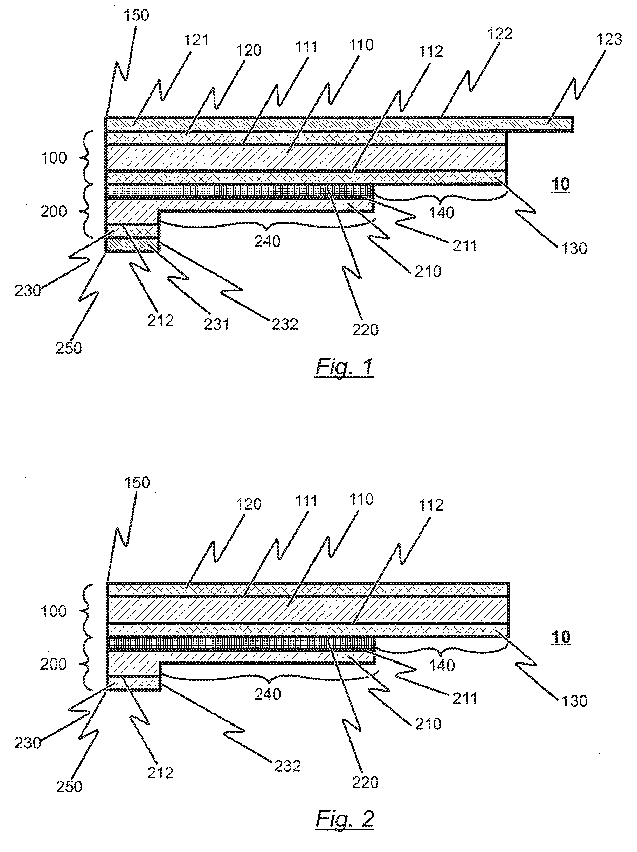

Fig. 1 shows a lateral schematic view on an adhesive tape 10. The tape consists of a double-sided adhesive tape and a splitable tape. The double-sided adhesive tape 100 comprises a carrier layer 110 in between a first self-adhesive layer 120 and a second self-adhesive layer 130. The carrier layer 110 is made of a material appropriate for the respective area of application and may be made of thin and flexible materials, among others, of for example paper or paper based material, tissue, plastic film or metal.

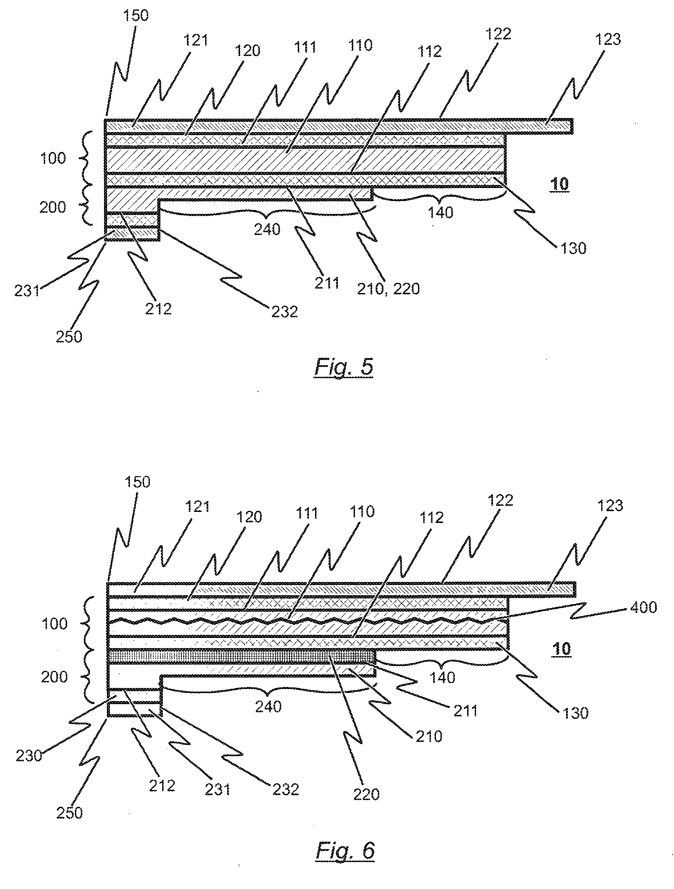

The splitable tape 200 has a splitable layer 210 being made of, for example, paper or plastic film. This splitable layer 210 is adapted to break a rupture when a certain initiating force is applied to the splitable layer 210 itself or any adjacent layers it is compounded to. The splitable layer 210 has, on its upper surface 211 a fixation layer 220. The splitable layer 210 and the fixation layer 220 may be compounded with each other. It is also possible to integrate the fixation layer 220 into the splitable layer 210 (as shown in Fig. 5 and described below).

On a lower surface 212 of the splitable layer 210 a third self-adhesive layer 230 is present. In a ready-to-use partially adhesive tape as shown in Fig. 1, the third self-adhesive layer 230 extends, for example, from a first edge region 250 of the splitable tape 200 to a kiss-cut edge 232. Adjacent to this kiss-cut edge 232 an essentially non-adhesive region 240 extends just up to the other edge of the splitable tape 200, such that the lower surface of the entire splitable tape 200 is only sticky in a first edge region 250 of the splitable tape extending from the border or edge of the splitable tape up to the kiss-cut edge 232. The splitable tape 200 is also narrower than the double-sided adhesive tape 100. Since the fixation layer 220 of the splitable tape 200 is adhered to the second self-adhesive layer 130 of the double-sided adhesive tape 100 in such a way that that border in the first edge region 250 of the splitable tape is essentially flush with the border in a second edge region 150 of the double-sided adhesive tape, adjacent to the essentially non-adhesive region 250 of the splitable tape and exposed adhesive region of the second self-adhesive layer 120 is formed. In another embodiment, the border in the first edge region 250 of the splitable tape may also not be flush with the border in a second edge region 150 of the double-sided adhesive tape.

Additionally, a first release liner 121 is provided on the top surface of the double-sided adhesive tape 100 covering and protecting the first self-adhesive layer 120. The first release liner 121 is slightly broader or wider than the first self-adhesive layer 120 that it covers which allows for easy lifting the first release liner 121 prior to using the partially adhesive tape 10 in a reel change application. In other words, a finger lift 123 is formed on the first release liner 121.

Additionally, a second release liner 231 is provided on the lower surface of the third self-adhesive layer 230 of the splitable tape 200. This second release liner 231 is removed before joining the topmost web of the web material and the second web underneath.

A lateral, schematic view of an adhesive tape according to Fig. 1 with the first release liner 121 and the second release liner 231 removed is shown in Fig. 2. Accordingly, Fig. 2 shows an adhesive tape according to the invention which is ready to use and where none of the adhesive regions are covered by protecting lining paper or plastic film 121, 131.

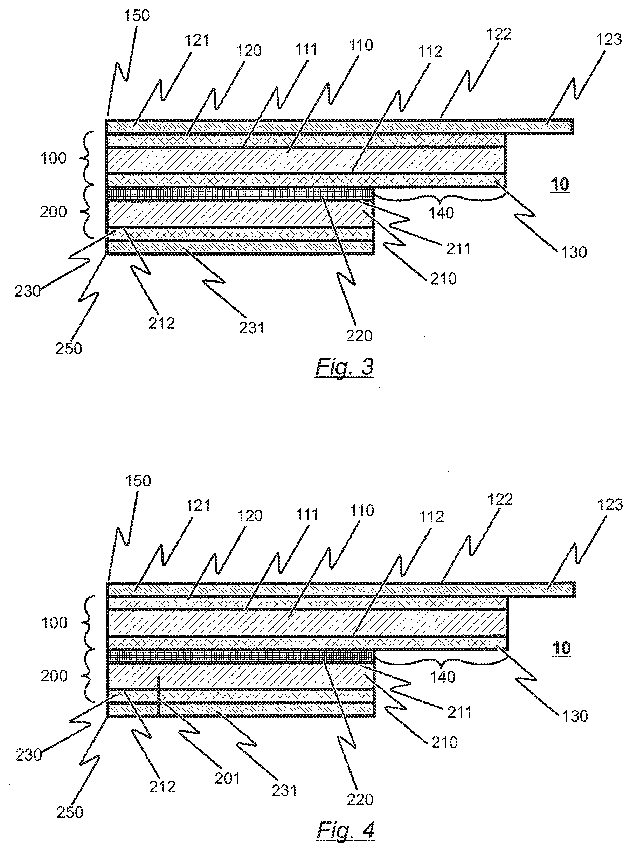

Fig. 3 shows a lateral, schematic view of an adhesive tape during its manufacturing process. In contrast to the tape of Fig. 1, a kiss-cut 201 has not yet been performed on the third self-adhesive layer 230 and the splitable layer 210 of the splitable tape 200. Accordingly, a non-adhesive region 240 of the splitable tape as shown in Fig. 1 has not yet been established at this stage of tape production.

As can be seen in Fig. 4, such a kiss-cut 201 is applied to at least the third self-adhesive layer 230 and a possible second release liner 231 covering it. While it is possible to cut further just into the splitable layer 210 of the splitable tape 200 this may or may not be necessary depending on the physical configuration of the splitable layer 210. In order to produce a ready-to-use adhesive tape 10 as shown in, for example, Fig. 1 from the production state as shown in Fig. 4, the unwounded part of the third self-adhesive layer 230 is then removed by splitting the splitable layer 210 from the edge up to the kiss-cut or vice versa.

Fig. 5 shows a lateral, schematic view of an adhesive tape 10 essentially in accordance with the embodiment as shown in Fig. 1. In this embodiment of Fig. 5, the fixation layer 220 has been integrated into the splitable layer 210. In other words, in this embodiment the splitable layer 210 and the fixation layer 220 are made of the same material and thus merged into one another. This merging of the fixation layer 220 and the splitable layer 210 into one single splitable fixation layer (210, 220) can of course apply to the other embodiments discussed as well.

In the embodiment shown in Fig. 6 an additional machine-detectable component 400 is provided in the carrier layer 110 of the double-sided adhesive tape 100. It is of course understood that incorporating a machine-detectable component 400 is not limited to the carrier layer 110 but can just as well be integrated in any of the other layers remaining on the splicing location after a splice in a flying reel change application is performed, such as one of the first self-adhesive layer 120 or the second self-adhesive layer 130 of the double-sided adhesive tape 100 or the fixation layer 220 of the splitable tape. In case the fixation layer 220 and the splitable layer 210 of the splitable tape 200 are merged into one another as discussed above, when integrating a machine-detectable component 400 it has to be made sure that the machine-detectable component does not remain on the second web of the web material after the flying reel splice is performed.

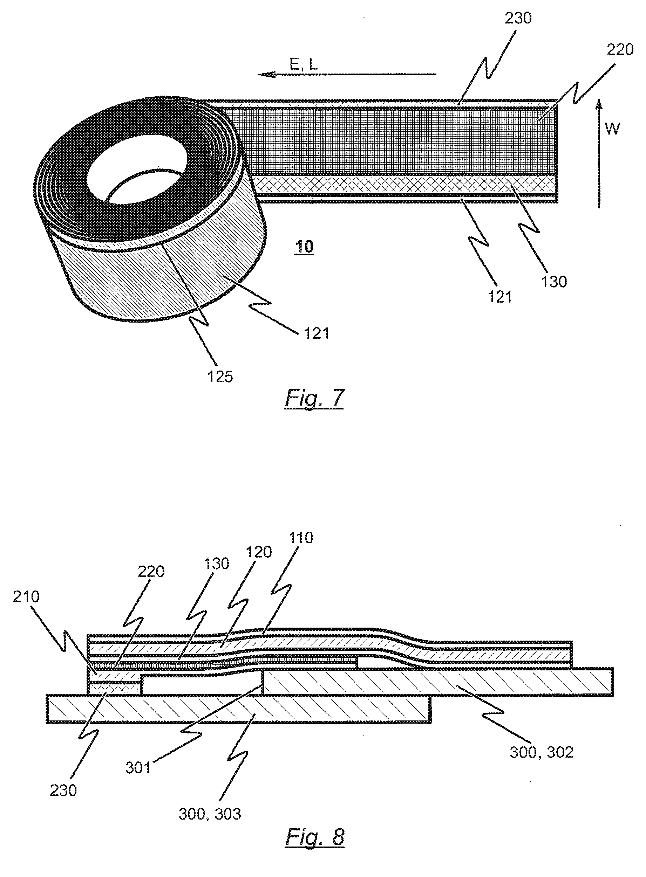

In the perspective view of Fig. 7, an adhesive tape 10 is shown as it is partially unwound from a tape roll. In Fig. 7, the arrow marked with reference sign E identifies the main extrusion direction of the adhesive tape 10. This extrusion direction E corresponds to what is turned the length of the tape or the direction of length L in this description and the claims. Accordingly, in Fig. 7, the arrow labelled with reference sign W designates the width of the tape.

Before the tape 10 is applied to a reel of wound web material, the tape has to be partially unwound from the roll and in the extrusion direction E. After application, the length of the tape corresponds essentially to the width or broadness of the web material on the reel. Accordingly, the tape 10 extends over the leading edge of the wound web material in the direction of width W of the tape which corresponds to the winding direction of the wound web material.

Furthermore, as shown in Fig. 7, in an embodiment of the present invention an ink line or pigment line 125 indicating essentially the kiss-cut edge 232 of the third adhesive layer 230 is visible on or through the first release liner 121 of the adhesive tape 10.

Figures 8 to 10 show the use of the adhesive tape 10 when a splice or flying reel change is performed.

As can be seen from Fig. 8, a topmost web 302 of wound web material 300 is lying in an overlapping manner on the second web 303 of wound web material 300. As already indicated above, the terms topmost web 302 and second web 303 have been introduced for the sake of simplification only. It is not to be understood that the wound web material 300 consists of separate and separated single sheets. Rather, the wound web material 300 consists of one single web which is wound on a reel or roll. In a simplified manner, when the web material is wound on this roll, the topmost layer of the wound web material 300 can be regarded as the topmost web 302 just until or shortly before the first wind of the web material 300 reaches the leading edge 301 again.

In Fig. 8, an adhesive tape 10 is positioned over and across the leading edge 301 of the wound web material 300 such that the essentially non-adhesive region 240 of the splitable tape 200 extends over said leading edge 301. Adjacent to this overlapping region, on the topmost web 302 of the wound web material 300, the exposed adhesive region 140 of the second self-adhesive layer 130 is adhered to the top surface of the topmost web 302 of the wound web material 300. On the opposite side with regard to the width W of the tape the third self-adhesive layer 230 is adhered to the second web 303 of wound web material 300. In this way, the topmost web 302 is sufficiently fixed on the second web 303, thus allowing a roll speed up of the reel the web material 300 is wound on.

In addition, the first self-adhesive layer 120 on the top surface of the adhesive tape 10 is ready for being brought into contact with another web material for establishing an adhesive connection between the topmost web 302 of the wound web material 300 and this other sheet of web material.

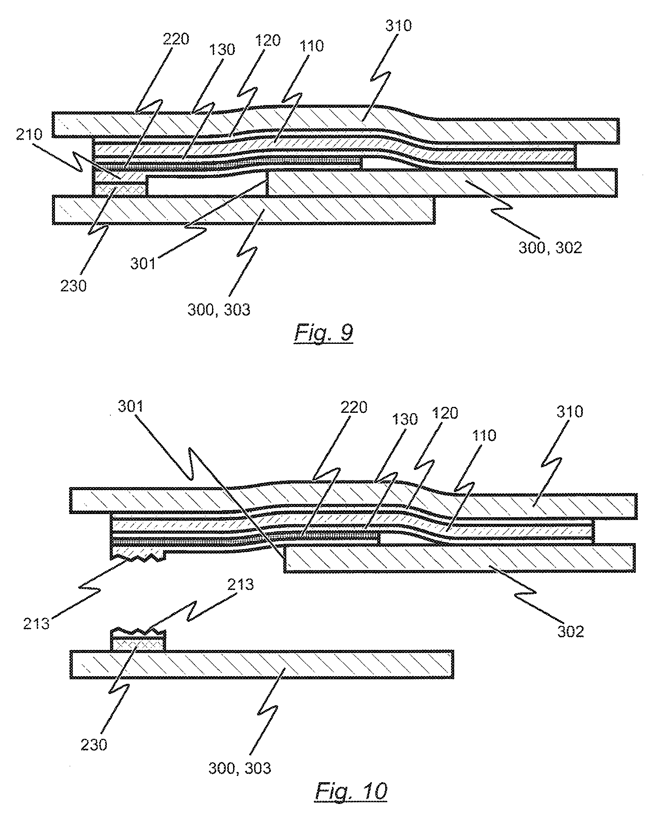

As can be seen from Fig. 9, web material 310 being currently unwound, i.e. being spun off an old reel of web material not shown is adhered to this upper surface, which means it is adhered to the first self-adhesive layer 120 of the adhesive tape 10. In a flying reel change application, this is done by approaching the old reel of almost completely spun-off web material 310 to the new reel of web material 300 or vice versa, respectively.

In Fig. 9, it is evident that essentially the whole upper surface of the adhesive tape 10, i.e. the entire first self-adhesive layer 120 is available for establishing the connection with the old web material 310 being currently unwound.

Fig. 9 shows the state during a flying reel change or splice action when the connection between the old, nearly entirely spun-off web material 310 and the topmost web 302 of wound web material 300 on a new roll or reel has just been performed, i.e. the very moment of splicing.

As shown in Fig. 10, an instant later the topmost web 302 of wound web material 300 is drawn into the web processing machine due to the interconnection between the old web material 310 being currently unwound and the topmost web 302 in the splicing area.

Accordingly, this topmost web 302 is ripped off the second web 303, resulting in a force in the splitable tape 200. Since the splitable layer 210 of the splitable tape 200 is adapted to rupture at a certain initiating force, as soon as this force is exceeded, the remaining part of the splitable layer 210 connecting the fixation layer 220 and the third self-adhesive layer 230 brakes up in a split 213.

### List of reference signs

- 10: adhesive tape (partially adhesive tape)
- 100: double-sided adhesive tape
- 110: carrier layer
- 111: upper surface of the carrier layer
- 112: lower surface of the carrier layer
- 120: first self-adhesive layer
- 121: first release line
- 122: upper surface of the first release liner
- 123: finger lift
- 125: pigment line
- 130: second self-adhesive layer
- 140: exposed adhesive region of the second self-adhesive layer
- 150: second edge region of the double-sided adhesive tape
- 200: splitable tape
- 201: kiss-cut
- 210: splitable layer
- 211: upper surface of the splitable layer
- 212: lower surface of the splitable layer
- 213: split
- 220: fixation layer
- 230: third self-adhesive layer
- 231: second release liner
- 232: kiss-cut edge of the third adhesive layer
- 240: non-adhesive region of the splitable tape
- 250: first edge region of the splitable tape
- 300: wound web material
- 301: leading edge of the wound web material
- 302: topmost web of the wound web material
- 303: second web of the wound web material
- 310: web material being unwound
- 400: machine-detectable component
- L: direction of lenght
- W: direction of width
- E: extension direction

## Claims

1. Adhesive tape (10) for use in flying reel change applications, the adhesive tape (10) consisting of:
- a double-sided adhesive tape (100), wherein the double-sided adhesive tape (100) comprises:
- a carrier layer (110);
- a first self-adhesive layer (120) on an upper surface (111) of the carrier layer (110); and
- a second self-adhesive layer (130) on a lower surface (112) of the carrier layer (110); and
- a splitable tape (200), wherein the splitable tape (200) comprises:
- a splitable layer (210) made of paper or plastic film;
- at least one third self-adhesive layer (230) on a lower surface (212) of the splitable layer (210); and
- fixation layer (220) adhered to an upper surface (211) of the splitable layer (210),
the splitable tape (200) being narrower than the double-sided adhesive tape (100);
**characterized in that**
the at least one third self-adhesive layer (230) of the splitable tape (200) is narrower than the fixation layer (220) of the splitable tape (200), such that a non-adhesive region (240) is formed on the lower surface (212) of the splitable layer (210), wherein the third self-adhesive layer (230) extends from a first edge region (250) of the splitable tape (200) to a kiss-cut edge (232) and wherein adjacent to this kiss-cut edge (232) the non-adhesive region (240) extends just up to the other edge of the splitable tape (200), such that the lower surface of the entire splitable tape (200) is only sticky in a region of the splitable tape extending from the first edge region (250) of the splitable tape up to the kiss-cut edge (232).

2. Adhesive tape (10) according to claim 1, wherein the fixation layer (220) of the splitable tape (200) is narrower than carrier layer (110) of the double-sided adhesive tape (100).

3. Adhesive tape (10) according any of the preceding claims, wherein the fixation layer (220) of the splitable tape (200) is adhered to the second self-adhesive layer (130) of the double-sided adhesive tape (100), such that a first edge region (250) with respect to the width (W), of the splitable tape (200) corre-sponds to a second edge region (150), with respect to the width (W), of the double-sided adhesive tape (100).

4. Adhesive tape (10) according to any of the preceding claims, wherein the double-sided adhesive tape (100) further comprises a first release liner (121) for covering the first self-adhesive layer (120).

5. Adhesive tape (10) according to claim 4, wherein the first release liner (121) is wider than carrier layer (100).

6. Adhesive tape (10) according to any of the preceding claims, wherein the splitable tape (200) further comprises a second release liner (231) for covering the at least one third self-adhesive layer (230).

7. Adhesive tape (10) according to any of the preceding claims, wherein the carrier layer (110) is one of the tissue carrier, a plastic film carrier or a metal carrier.

8. Adhesive tape (10) according to any of the preceding claims, wherein the first self-adhesive layer (120), the second self-adhesive layer (130) and/or the third self-adhesive layer (230) is/are water-soluble or based on acrylic or based on silicone compounds.

9. Adhesive tape (10) according to any of the preceding claims, wherein the at least one third self-adhesive layer 230 is present in the first edge region (250) of the splitable tape (200).

10. Adhesive tape (10) according to any of claims 1 to 8, wherein the at least one third self-adhesive layer (230) is present in a region different from the edge region (250) of the splitable tape (200).

11. Adhesive tape (10) according to any of claims 2 to 10, wherein a pigment line (125) allowing proper positioning of the adhesive tape (10) is visible on or through an upper surface (122) of the first release liner (121), the line extend-ing in the main extrusion direction (E) and indicating the kiss-cut edge (232).

12. Adhesive tape (10) according to any of the preceding claims, wherein the Adhesive tape (10) further comprises a machine-detectable component (400), the machine-detectable component (400) extending along substantially the entire length (L) of the adhesive tape (10).

13. Method of manufacturing an adhesive tape (10) according to claim 1, wherein the method comprises the following steps:
a) providing a double-sided adhesive tape (100) which comprises:
- a carrier layer (110);
- a first self-adhesive layer (120) on an upper surface (111) of the carrier layer (110); and
- a second self-adhesive layer (130) on a lower surface (112) of the carrier layer (110);
b) providing a splitable tape (200) which comprises:
- a splitable layer (210);
- at least one third self-adhesive layer (230) on a lower surface (212) of the splitable layer (210);
- a fixation layer (220) on an upper surface (211) of the splitable layer (210);
c) adhering the fixation layer (220) of the splitable tape (200) to the second self-adhesive layer (130) of the double-sided adhesive tape (100) such that a first edge region (250), with respect to the width, of the splitable tape (200) corresponds to a second edge region (150), with respect to the width, of the double-sided adhesive tape (100);
d) kiss-cutting the third self-adhesive layer (230) of the splitable tape (200), the kiss-cut (201) extending essentially in the direction of the length (L) of the splitable tape;
e) splitting the splitable tape (200) and removing parts of the at least one third self-adhesive layer (230) to the kiss-cut (201).

14. Method of performing a flying reel change, wherein the method comprises the following steps:
a) providing an adhesive tape (10) according to any of claims 1 to 12;
b) providing wound web material (300) to be joined with another web material (310) being currently unwound, the wound web material (300) com-prising an edge (301), said edge defining the end of the topmost web (302) of the wound web material (300);
c) adhering the adhesive tape (10) in an overlapping manner across the edge (301) of the wound web material (300) and the adjacent second web (303);
d) accelerating the wound web material (300) to essentially the same circumferential speed as the speed of the web material (310) being currently unwound;
e) pressing the wound web material (300) against the web material (310) being currently unwound, the first self-adhesive layer (120) of the double-sided adhesive tape (100) being adhered to a surface of the web material (310) being currently unwound.

## Patentansprüche

1. Klebeband (10) zur Verwendung bei Anwendungen mit fliegendem Rollenwechsel, wobei das Klebeband (10) aus Folgendem besteht:
- einem doppelseitigen Klebeband (100), wobei das doppelseitige Klebeband (100) aufweist:
- eine Trägerschicht (110);
- eine erste selbstklebende Schicht (120) auf einer oberen Oberfläche (111) der Trägerschicht (110); und
- eine zweite selbstklebende Schicht (130) auf einer unteren Oberfläche (112) der Trägerschicht (110); und
- ein trennbares Band (200), wobei das trennbare Band (200) aufweist:
- eine trennbare Schicht (210), die aus Papier oder Kunststofffilm hergestellt ist;
- mindestens eine dritte selbstklebende Schicht (230) auf einer unteren Oberfläche (212) der trennbaren Schicht (210); und
- eine Befestigungsschicht (220), die an eine obere Oberfläche (211) der trennbaren Schicht (210) angehaftet ist,
wobei das trennbare Band (200) schmäler als das doppelseitige Klebeband (100) ist;
**dadurch gekennzeichnet, dass**
die mindestens eine dritte selbstklebende Schicht (230) des trennbaren Bandes (200) schmäler als die Befestigungsschicht (220) des trennbaren Bandes (200) ist, derart, dass ein nichtklebender Bereich (240) an der unteren Oberfläche (212) der trennbaren Schicht (210) ausgebildet ist, wobei sich die dritte selbstklebende Schicht (230) von einem ersten Kantenbereich (250) des trennbaren Bandes (200) zu einer Anstanzkante (232) erstreckt und wobei sich dieser Anstanzkante (232) benachbart der nichtklebende Bereich (240) genau bis zu der anderen Kante des trennbaren Bandes (200) erstreckt, derart, dass die untere Oberfläche des gesamten trennbaren Bandes (200) nur in einem Bereich des trennbaren Bandes klebrig ist, der sich von dem ersten Kantenbereich (250) des trennbaren Bandes bis zu der Anstanzkante (232) erstreckt.

2. Klebeband (10) nach Anspruch 1, wobei die Befestigungsschicht (220) des trennbaren Bandes (200) schmäler als die Trägerschicht (110) des doppelseitigen Klebebandes (100) ist.

3. Klebeband (10) nach einem beliebigen der vorhergehenden Ansprüche, wobei die Befestigungsschicht (220) des trennbaren Bandes (200) an die zweite selbstklebende Schicht (130) des doppelseitigen Klebebandes (100) angehaftet ist, derart, dass ein in Bezug auf die Breite (W) erster Kantenbereich (250) des trennbaren Bandes (200) einem in Bezug auf die Breite (W) zweiten Kantenbereich (150) des doppelseitigen Klebebandes (100) entspricht.

4. Klebeband (10) nach einem beliebigen der vorhergehenden Ansprüche, wobei das doppelseitige Klebeband (100) ferner eine erste abziehbare Trennfolie (121) zum Abdecken der ersten selbstklebenden Schicht (120) aufweist.

5. Klebeband (10) nach Anspruch 4, wobei die erste abziehbare Trennfolie (121) breiter als die Trägerschicht (100) ist.

6. Klebeband (10) nach einem beliebigen der vorhergehenden Ansprüche, wobei das trennbare Band (200) ferner eine zweite abziehbare Trennfolie (231) zum Abdecken der mindestens einen dritten selbstklebenden Schicht (230) aufweist.

7. Klebeband (10) nach einem beliebigen der vorhergehenden Ansprüche, wobei die Trägerschicht (110) eine aus der Gruppe umfassend einen Gewebeträger, einen Kunststofffilmträger oder einen Metallträger ist.

8. Klebeband (10) nach einem beliebigen der vorhergehenden Ansprüche, wobei die erste selbstklebende Schicht (120), die zweite selbstklebende Schicht (130) und/oder die dritte selbstklebende Schicht (230) wasserlöslich oder acrylbasiert oder silikonverbindungsbasiert ist/sind.

9. Klebeband (10) nach einem beliebigen der vorhergehenden Ansprüche, wobei die mindestens eine dritte selbstklebende Schicht (230) in dem ersten Kantenbereich (250) des trennbaren Bandes (200) vorliegt.

10. Klebeband (10) nach einem beliebigen der Ansprüche 1 bis 8, wobei die mindestens eine dritte selbstklebende Schicht (230) in einem anderen Bereich als dem Kantenbereich (250) des trennbaren Bandes (200) vorliegt.

11. Klebeband (10) nach einem beliebigen der Ansprüche 2 bis 10, wobei eine Pigmentlinie (125), die das geeignete Positionieren des Klebebandes (10) ermöglicht, auf einer oberen Oberfläche (122) oder durch eine obere Oberfläche (122) der ersten abziehbaren Trennfolie (121) sichtbar ist, wobei sich die Linie in der Hauptextrusionsrichtung (E) erstreckt und die Anstanzkante (232) anzeigt.

12. Klebeband (10) nach einem beliebigen der vorhergehenden Ansprüche, wobei das Klebeband (10) ferner eine maschinendetektierbare Komponente (400) aufweist, wobei sich die maschinendetektierbare Komponente (400) entlang im Wesentlichen der gesamten Länge (L) des Klebebandes (10) erstreckt.

13. Verfahren zum Herstellen eines Klebebandes (10) nach Anspruch 1, wobei das Verfahren folgende Schritte aufweist:
a) Bereitstellen eines doppelseitigen Klebebandes (100), welches aufweist:
- eine Trägerschicht (110);
- eine erste selbstklebende Schicht (120) auf einer oberen Oberfläche (111) der Trägerschicht (110); und
- eine zweite selbstklebende Schicht (130) auf einer unteren Oberfläche (112) der Trägerschicht (110);
b) Bereitstellen eines trennbaren Bandes (200), welches aufweist:
- eine trennbare Schicht (210);
- mindestens eine dritte selbstklebende Schicht (230) auf einer unteren Oberfläche (212) der trennbaren Schicht (210);
- eine Befestigungsschicht (220) auf einer oberen Oberfläche (211) der trennbaren Schicht (210);
c) Anhaften der Befestigungsschicht (220) des trennbaren Bandes (200) an die zweite selbstklebende Schicht (130) des doppelseitigen Klebebandes (100), derart, dass ein in Bezug auf die Breite erster Kantenbereich (250) des trennbaren Bandes (200) einem in Bezug auf die Breite zweiten Kantenbereich (150) des doppelseitigen Klebebandes (100) entspricht;
d) Anstanzen der dritten selbstklebenden Schicht (230) des trennbaren Bandes (200), wobei sich die Anstanzung (201) im Wesentlichen in Richtung der Länge (L) des trennbaren Bandes erstreckt;
e) Zertrennen des trennbaren Bandes (200) und Entfernen von Teilen der mindestens einen dritten selbstklebenden Schicht (230) zu der Anstanzung (201).

14. Verfahren zum Durchführen eines fliegenden Rollenwechsels, wobei das Verfahren folgende Schritte aufweist:
a) Bereitstellen eines Klebebandes (10) nach einem beliebigen der Ansprüche 1 bis 12;
b) Bereitstellen von aufgewickeltem Bahnmaterial (300), das mit einem anderen Bahnmaterial (310), welches gerade abgewickelt wird, zusammengefügt werden soll, wobei das aufgewickelte Bahnmaterial (300) eine Kante (301) aufweist, wobei die Kante das Ende der obersten Bahn (302) des aufgewickelten Bahnmaterials (300) definiert;
c) Anhaften des Klebebandes (10) auf überlappende Weise über die Kante (301) des aufgewickelten Bahnmaterials (300) und der angrenzenden zweiten Bahn (303);
d) Beschleunigen des aufgewickelten Bahnmaterials (300) auf im Wesentlichen dieselbe Umfangsgeschwindigkeit wie die Geschwindigkeit des gerade abgewickelt werdenden Bahnmaterials (310);
e) Andrücken des aufgewickelten Bahnmaterials (300) an das gerade abgewickelt werdende Bahnmaterial (310), wobei die erste selbstklebende Schicht (120) des doppelseitigen Klebebandes (100) an eine Oberfläche des gerade abgewickelt werdenden Bahnmaterials (310) angehaftet wird.

## Revendications

1. Ruban adhésif (10) destiné à une utilisation dans des applications de changement automatique de bobines, le ruban adhésif (10) se composant de :
- un ruban adhésif double face (100), le ruban adhésif double face (100) comprenant :
- une couche de support (110) ;
- une première couche auto-adhésive (120) sur une surface supérieure (111) de la couche de support (110) ; et
- une deuxième couche auto-adhésive (130) sur une surface inférieure (112) de la couche de support (110) ; et
- un ruban refendable (200), le ruban refendable (200) comprenant :
- une couche refendable (210) constituée de papier ou d'un film de plastique ;
- au moins une troisième couche auto-adhésive (230) sur une surface inférieure (212) de la couche refendable (210) ; et
- une couche de fixation (220) adhérant à une surface supérieure (211) de la couche refendable (210),
le ruban refendable (200) étant plus étroit que le ruban adhésif double face (100) ;
**caractérisé en ce que**
ladite au moins une troisième couche auto-adhésive (230) du ruban refendable (200) est plus étroite que la couche de fixation (220) du ruban refendable (200), de telle sorte qu'une région non adhésive (240) est formée sur la surface inférieure (212) de la couche refendable (210), la troisième couche auto-adhésive (230) s'étendant d'une première région marginale (250) du ruban refendable (200) à un bord de découpage par effleurage (232) et, de façon adjacente à ce bord de découpage par effleurage (232), la région non adhésive (240) s'étendant exactement jusqu'à l'autre bord du ruban refendable (200), de telle sorte que la surface inférieure de l'ensemble du ruban refendable (200) n'est collante que dans une région du ruban refendable qui s'étend de la première région marginale (250) du ruban refendable au bord de découpage par effleurage (232).

2. Ruban adhésif (10) selon la revendication 1, dans lequel la couche de fixation (220) du ruban refendable (200) est plus étroite que la couche de support (110) du ruban refendable (100).

3. Ruban adhésif (10) selon l'une quelconque des revendications précédentes, dans lequel la couche de fixation (220) du ruban refendable (200) adhère à la deuxième couche auto-adhésive (130) du ruban adhésif double face (100), de telle sorte qu'une première région marginale (250) relativement à la largeur (W) du ruban refendable (200) corresponde à une deuxième région marginale (150) relativement à la largeur (W) du ruban adhésif double face (100).

4. Ruban adhésif (10) selon l'une quelconque des revendications précédentes, dans lequel le ruban adhésif double face (100) comprend en outre une première doublure anti-adhésive (121) pour le recouvrement de la première couche auto-adhésive (120).

5. Ruban adhésif (10) selon la revendication 4, dans lequel la première doublure anti-adhésive (121) est plus large que la couche de support (100).

6. Ruban adhésif (10) selon l'une quelconque des revendications précédentes, dans lequel le ruban refendable (200) comprend en outre une deuxième doublure anti-adhésive (231) pour le recouvrement de ladite au moins une troisième couche auto-adhésive (230).

7. Ruban adhésif (10) selon l'une quelconque des revendications précédentes, dans lequel la couche de support (110) est sélectionnée parmi un support en papier ouaté, un support constitué d'un film de plastique, ou un support métallique.

8. Ruban adhésif (10) selon l'une quelconque des revendications précédentes, dans lequel la première couche auto-adhésive (120), la deuxième couche auto-adhésive (130) et/ou la troisième couche auto-adhésive (230) est/sont hydrosoluble(s) ou à base d'un composé acrylique ou à base de composés de silicone.

9. Ruban adhésif (10) selon l'une quelconque des revendications précédentes, dans lequel ladite au moins une troisième couche auto-adhésive (230) est présente dans la première région marginale (250) du ruban refendable (200).

10. Ruban adhésif (10) selon l'une quelconque des revendications 1 à 8, dans lequel ladite au moins une troisième couche auto-adhésive (230) est présente dans une région différente de la région marginale (250) du ruban refendable (200).

11. Ruban adhésif (10) selon l'une quelconque des revendications 2 à 10, dans lequel une ligne de pigment (125) permettant de positionner correctement le ruban adhésif (10) est visible sur ou à travers une surface supérieure (122) de la première doublure anti-adhésive (121), la ligne s'étendant dans la direction d'extrusion principale (E) et indiquant l'emplacement du bord de découpage par effleurage (232).

12. Ruban adhésif (10) selon l'une quelconque des revendications précédentes, le ruban adhésif (10) comprenant en outre un élément détectable par une machine (400), l'élément détectable par une machine (400) s'étendant pratiquement sur toute la longueur (L) du ruban adhésif (10).

13. Procédé de fabrication d'un ruban adhésif (10) selon la revendication 1, le procédé consistant à :
a) fournir un ruban adhésif double face (100) qui comprend :
- une couche de support (110) ;
- une première couche auto-adhésive (120) sur une surface supérieure (111) de la couche de support (110) ; et
- une deuxième couche auto-adhésive (130) sur une surface inférieure (112) de la couche de support (110) ;
b) fournir un ruban refendable (200) qui comprend :
- une couche refendable (210) ;
- au moins une troisième couche auto-adhésive (230) sur une surface inférieure (212) de la couche refendable (210) ;
- une couche de fixation (220) sur une surface supérieure (211) de la couche refendable (210) ;
c) faire adhérer la couche de fixation (220) du ruban refendable (200) à la deuxième couche auto-adhésive (130) du ruban adhésif double face (100) de telle sorte qu'une première région marginale (250) relativement à la largeur du ruban refendable (200) corresponde à une deuxième région marginale (150) relativement à la largeur du ruban adhésif double face (100) ;
d) découper par effleurage la troisième couche auto-adhésive (230) du ruban refendable (200), le découpage par effleurage (201) s'étendant essentiellement dans la direction de la longueur (L) du ruban refendable ;
e) refendre le ruban refendable (200) et retirer des parties de ladite au moins une troisième couche auto-adhésive (230) jusqu'au découpage par effleurage (201).

14. Procédé de réalisation d'un changement automatique de bobines, le procédé consistant à :
a) fournir un ruban adhésif (10) selon l'une quelconque des revendications 1 à 12 ;
b) fournir un matériau sous forme de bande enroulé (300) à raccorder avec un autre matériau sous forme de bande (310) en cours de déroulement, le matériau sous forme de bande enroulé (300) comprenant un bord (301), ledit bord délimitant l'extrémité de la bande située tout au dessus (302) du matériau sous forme de bande (300) ;
c) faire adhérer le ruban adhésif (10) de façon à produire un chevauchement en travers du bord (301) du matériau sous forme de bande enroulé (300) et de la deuxième bande adjacente (303) ;
d) faire accélérer le matériau sous forme de bande enroulé (300) jusqu'à essentiellement la même vitesse circonférentielle que la vitesse du matériau sous forme de bande (310) en cours de déroulement ;
e) presser le matériau sous forme de bande enroulé (300) contre le matériau sous forme de bande (310) en cours de déroulement, la première couche auto-adhésive (120) du ruban adhésif double face (100) adhérant à une surface du matériau sous forme de bande (310) en cours de déroulement.
